# EUROPÄISCHE PATENTSCHRIFT

(11) **EP 2 070 877 B1**
(45) Veröffentlichungstag und Bekanntmachung des Hinweises auf die Patenterteilung: **29.09.2010**
(21) Anmeldenummer: 08020969.5
(22) Anmeldetag: 03.12.2008
(51) Int. Cl.: C02F 3/12

(54) **Kleinkläranlage**
Small-scale wastewater treatment plant
Une station d'épuration compacte

(30) Priorität: 03.12.2007 DE 202007016942 U
(43) Veröffentlichungstag der Anmeldung: 17.06.2009
(73) Patentinhaber: Mall GmbH, 78166 Donaueschingen-Pfohren (DE)
(72) Erfinder: Budzinski, Volker, 95497 Goldkronach (DE); Klemenz, Stephan, 78073 Bod Dürrheim (DE)
(74) Vertreter: Westphal, Klaus

(56) Entgegenhaltungen:
- EP-A- 1 860 073
- WO-A-03/042465
- DE-A1- 10 356 208
- DE-C1- 10 203 076
- DE-U1- 20 302 765
- DE-U1-202004 001 854
- DE-U1-202005 006 689

## Beschreibung

Die Erfindung betrifft eine Kläranlage gemäß dem Oberbegriff des Anspruchs 1.

Kläranlagen dieser Gattung werden häufig als Kleinkläranlagen für einzelne oder einige Gebäude eingesetzt, die nicht an eine öffentliche Gemeindekläranlage angeschlossen sind. Das Abwasser wird in diesen Kleinkläranlagen zumindest so weit gereinigt und geklärt, dass es im Boden versickern oder in ein Gewässer eingeleitet werden kann. Die Kläranlage kann insbesondere als sogenannte SBR-Kläranlage (Sequence Batch Reactor) betrieben werden. Bei einer solchen SBR-Kläranlage wird das in der Regel schubweise anfallende Abwasser in einem Pufferbecken gesammelt. In einem vorgegebenen Zyklus wird as Abwasser in einem Füllintervall aus dem Pufferbecken in einen Reaktorbehälter gepumpt, in welchem eine biologische Klärung stattfindet. In diesem Reaktorbehälter wird für ein vorgegebenes Belüftungsintervall Luft durch das Wasser geleitet, um die die Schadstoffe abbauenden Bakterien zu beleben. Anschließend an das Belüftungsintervall wird ein Ruheintervall eingeschoben, in welchem die Schwebestoffe sedimentieren können. In einem anschließendem Abzugintervall wird das Klarwasser in einen Ablauf gepumpt, der zur Versickerung, in ein Gewässer oder dergleichen führt. Ggf. kann der sich am Boden des Reaktorbehälters absetzende Sekundärschlamm abgesaugt und entsorgt oder in das Pufferbecken zurückgepumpt werden.

Eine gattungsgemäße Kläranlage ist beispielsweise der DE 20 2005 006 689 U1 zu entnehmen. Die dort beschriebene Kläranlage weist zusätzlich einen Drucksensor auf, welcher in dem ersten Luftweg von der Druckluftquelle zu der Belüftungseinrichtung bzw. den verschiedenen Pumpen angeordnet ist und der es ermöglicht, den Füllstand in dem Reaktorbehälter über den Systemdruck zu bestimmen, den die von der Druckluftquelle für die Belüftung zugeführte Luft überwinden muss. Allerdings ist die Bestimmung des Füllstands mit aufwändigen Berechnungen verbunden, da der von dem Drucksensor gemessene Druck eine Überlagerung aus dem hydrostatischen Druck des Wassers in dem Reaktorbehälter und dem Druck, den die Druckluftquelle bereitstellt, ist. Auch die DE 103 56 208 A1 zeigt eine Kläranlage, bei welcher in einer von einer Druckluftquelle druckseitig abgehenden Luftleitung ein Drucksensor angeordnet ist, der einen Druck ermittelt, aus welchem durch aufwändige Berechnungen der Höhenstand des Wassers in der Kläranlage erfolgen kann.

Weiterhin bekannt sind Kläranlagen, bei welchen der Füllstand in dem Reaktorbehälter mittels eines Drucksensors bestimmt wird, der eine hydrostatische Druckmessung durchführt. Dieser Drucksensor ist vollständig abgekoppelt von dem System, über welches die Druckluftquelle Druckluft zu den entsprechenden Pumpen bzw. der Belüftungseinrichtung zuführt. Um in einer derartigen Kläranlage überprüfen zu können, ob die Druckluftquelle und die Kläranlage zuverlässig funktionieren, muss eine zusätzliche Überwachungsvorrichtung vorgesehen werden.

Der Erfindung liegt daher die Aufgabe zu Grunde, eine Kläranlage dahingehend zu verbessern, dass die Kläranlage einfacher aufgebaut und kostengünstiger herzustellen ist.

Die Aufgabe wird erfindungsgemäß gelöst durch eine Kläranlage mit den Merkmalen den Anspruchs 1.

Vorteilhafte Ausgestaltungen und Weiterbildungen der Erfindung sind in den Unteransprüchen angegeben.

Erfindungsgemäß wird derselbe Drucksensor sowohl für eine hydrostatische Höhenmessung des Wasserstands, beispielsweise in dem Reaktorbehälter oder dem Pufferbecken, als auch zur Prüfung der Funktion der Druckluftquelle verwendet. Dazu ist ein zweiter Luftweg vorgesehen, über welchen der Drucksensor mit dem Pufferbecken oder dem Reaktorbehälter verbindbar ist. Über eine Schaltvorrichtung kann der Drucksensor entweder mit dem zweiten Luftweg oder dem ersten Luftweg zwischen der Druckluftquelle und den mit Druckluft zu versorgenden Komponenten verbunden werden. Ist der Drucksensor über den ersten Luftweg mit der Druckluftquelle verbunden, kann anhand des gemessenen Drucks auf einfache Art und Weise festgestellt werden, ob die Druckluftquelle funktioniert oder eine der über die Druckluftquellen angesteuerten Komponenten defekt ist. Dazu muss lediglich überprüft werden, ob der von dem Drucksensor ermittelte Druck einen bestimmten oberen Schwellwert überschreitet oder einen bestimmten unteren Schwellwert unterschreitet. Eine exakte Auswertung des ermittelten Drucks im Hinblick auf den Füllstand des Reaktorbehälters oder des Pufferbeckens ist nicht nötig, sodass aufwändige Schaltungen und Berechnungen vermieden werden. Zur Ermittlung des Füllstands wird der Drucksensor über die Schaltvorrichtung mit dem ersten Luftweg verbunden, welcher in dem Pufferbecken oder dem Reaktorbehälter endet. Über den zweiten Luftweg kann eine einfache hydrostatische Höhenmessung des Wasserstands in den entsprechenden Becken erfolgen, welche ohne aufwändige Berechnungen möglich ist. Der Drucksensor kann somit für zwei Verwendungszwecke eingesetzt werden, was eine zusätzliche Überwachungsvorrichtung zur Prüfung der Funktion der Kläranlage und der Druckluftquelle entbehrlich macht. Andererseits wird jedoch durch die erfindungsgemäße Kläranlage eine aufwändige Auswertung eines ermittelten Druckwertes, welcher sich aus einer Überlagerung des hydrostatischen Drucks und des von der Druckluftquelle erzeugten Drucks ergibt, vermieden.

Erfindungsgemäß weist die Schaltvorrichtung ein erstes und ein zweites Ventil auf, wobei das erste Ventil in dem ersten Luftweg und das zweite Ventil in dem zweiten Luftweg angeordnet ist. Durch entsprechendes Öffnen und Schließen der beiden Ventile kann entweder der erste Luftweg oder der zweite Luftweg freigegeben und somit der Drucksensor entweder mit dem Becken, in welchem der Höhenstand ermittelt werden soll, oder mit der Druckluftquelle verbunden werden.

Vorzugsweise sind das erste und das zweite Ventil als Rückschlagventile ausgebildet, welche derart in den Luftwegen angeordnet sind, dass sie schließen, wenn der Druck am drucksensorseitigen Ende des jeweiligen Luftwegs höher ist als am drucksensorabgewandten Ende des jeweiligen Luftwegs. Ist die Druckluftquelle in Betrieb, wird auf diese Art und Weise automatisch das in dem ersten Luftweg angeordnete erste Ventil geöffnet, da der Luftdruck vor der Druckluftquelle höher ist als der Druck am drucksensorseitigen Ende des ersten Luftwegs. Gleichzeitig wird jedoch durch die entsprechende Druckverteilung das in dem zweiten Luftweg angeordnete zweite Ventil automatisch geschlossen, da der Luftdruck am drucksensorseitigen Ende des zweiten Luftweg höher ist als der Luftdruck am drucksensorabgewandten Ende des zweiten Luftwegs, welcher in dem Pufferbecken oder dem Reaktorbehälter endet. Solange die Druckluftquelle in Betrieb ist und Druckluft zu einer der entsprechenden mit Druckluft zu versorgenden Komponenten führt, überprüft damit der Drucksensor die Funktion der Druckluftquelle und der Kläranlage. Wird die Druckluftquelle abgeschaltet, sinkt der Druck vor der Druckluftquelle derart ab, dass er geringer ist als der Druck im drucksensorseitigen Ende des ersten Luftwegs, sodass das erste Ventil schließt. In dem zweiten Luftweg ist jedoch aufgrund des hydrostatischen Drucks vor der Wasseroberfläche in dem entsprechenden Behälter der Druck am drucksensorabgewandten Ende des zweiten Luftwegs höher als der Druck am drucksensorseitigen Ende, so dass das zweite Ventil öffnet und die hydrostatische Höhenmessung erfolgen kann.

Besonders bevorzugt sind die Rückschlagventile als Kugelventile ausgebildet, welche auch auf geringe Druckluftdifferenzen bereits reagieren.

Vorteilhafterweise ist die Kläranlage als Kleinkläranlage ausgebildet, welche lediglich für einzelne oder einige Gebäude eingesetzt werden, die nicht an eine öffentliche Kläranlage angeschlossen sind.

Besonders bevorzugt ist die Kläranlage als SBR-Kläranlage ausgebildet, welche gegenüber kontinuierlich durchströmten Kläranlagen den Vorteil hat, dass die Stoßbelastungen ausgeglichen werden und der Energieverbrauch erheblich reduziert wird, da das in der Regel schubweise anfallende Abwasser zunächst in einem Pufferbecken gesammelt wird und je nach Bedarf, beispielsweise auch in einem vorgegebenen Zyklus, das Abwasser aus dem Pufferbecken in das Reaktorbecken gepumpt wird, in welchem die Klärung stattfindet.

Vorzugsweise ist die Kläranlage im Wirbel- oder Schwebebettverfahren betreibbar. Dazu ist in dem Reaktorbehälter ein Trägermaterial für die Mikroorganismen angeordnet. Das Trägermaterial kann beispielsweise ein Granulat sein, beispielsweise ein Granulat aus Kunststoff, Sand, Blähton, Bims oder Aktivkohle, welches durch eine Aufwärtsströmung in dem Reaktorbehälter in Schwebe gehalten werden kann, so dass ein Wirbelbett oder ein Schwebebett entsteht. Die Mikroorganismen werden dadurch gleichmäßiger in dem Reaktorbehälter verteilt, um eine effektivere Klärung des Wassers zu erreichen.

Bei der erfindungsgemäßen Kläranlage werden Druckluftpumpen, insbesondere Mammut-Pumpen, verwendet, um das Abwasser und ggf. den Klärschlamm zu pumpen. Solche Druckluftpumpen haben den Vorteil, dass keine beweglichen mechanischen Teile oder elektrischen Komponenten sich in dem Abwasser befinden, die durch chemisch aggressive oder abrasive Bestandteile des Abwassers angegriffen und geschädigt werden können.

Vorzugsweise wird die Kläranlage als Kleinkläranlage ausgebildet, bei welcher das Pufferbecken und der Reaktorbehälter in einem gemeinsamen Behälter aus Beton oder Kunststoff angeordnet sind. Bei einer Neuerrichtung der Kläranlage können die Pumpen in diesem Behälter vormontiert sein. Es ist auch möglich, eine bestehende Kläranlage (Faulgrube) in der erfindungsgemäßen Weise nachzurüsten. Hierzu ist es von Vorteil, wenn die benötigten Pumpen auf einem gemeinsamen Träger montiert sind, der dann komplett in die vorhandene Kläranlage eingesetzt werden kann. Dadurch wird die Montage vereinfacht und erleichtert und das Nachrüsten kann kostengünstig durchgeführt werden.

Der erfindungsgemäße Grundaufbau der Kleinkläranlage, der die behördlichen Mindestanforderungen erfüllt, kann bei Bedarf modulartig ergänzt und funktionsmäßig erweitert werden. Für erhöhte Anforderungen und sensible Einleitungen des Abwassers in den Untergrund oder ein Oberflächengewässer kann zusätzlich eine Nitrifikation vorgesehen werden. Für die Einleitung in Wasserschutzzonen mit besonderen Anforderungen an den Reststickstoffgehalt des Abwassers kann die Kläranlage mit Nitrifikation und Denitrifikation ausgestattet werden. Weiter können zusätzliche Dosierpumpen für die Zugabe von Zusatzmitteln zur Nährstoffelimination, insbesondere zur Phosphat-Entfernung verwendet werden. Es ist auch möglich, das geklärte Abwasser als Betriebswasser z. B. für die Gartenbewässerung und die Toilettenspülung usw. zu benutzen, wobei vorzugsweise eine zusätzliche Membraneinheit zur Filterung und Reinigung des geklärten Abwassers verwendet wird.

Im Folgenden wird die Erfindung anhand eines in der Zeichnung dargestellten Ausführungsbeispiels näher erläutert. Es zeigen:

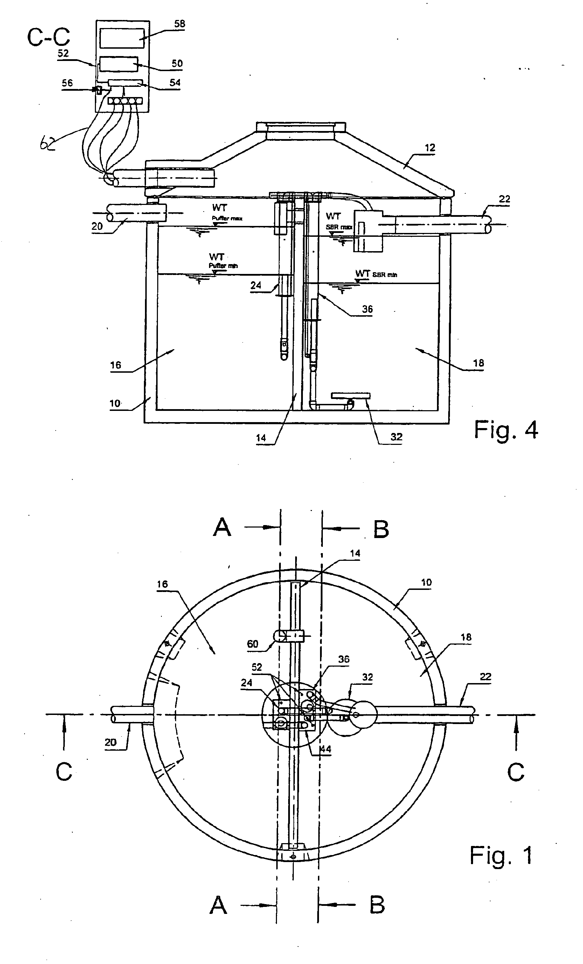

- Fig. 1: eine Draufsicht auf eine Kläranlage gemäß der Erfin- dung,
- Fig. 2: einen Schnitt gemäß der Linie A-A in Fig. 1,
- Fig. 3: einen Schnitt gemäß der Linie B-B in Fig. 1,
- Fig. 4: einen Schnitt gemäß der Linie C-C in Fig. 1 und
- Fig. 5: eine schematische Darstellung eines Teils der Luftwe- ge der Kläranlage gemäß Fig. 1.

Die in der Zeichnung dargestellte Kläranlage ist als SBR-Kleinkläranlage ausgebildet. Sie weist einen aus Beton oder Kunststoff bestehenden Behälter 10 auf, der in den Erdboden versenkt ist und durch einen Konus 12 abgedeckt ist. Der Konus 12 weist eine obere Öffnung auf, die durch einen Deckel verschließbar ist.

Der Behälter 10 ist durch eine vertikale diametral verlaufende Trennwand 14 in ein Pufferbecken 16 und einen Reaktorbehälter 18 unterteilt. Das aus einem oder mehreren Gebäuden, einer versiegelten Fläche oder dergleichen gesammelte Abwasser wird dem Pufferbecken 16 über einen Zulauf 20 zugeführt, der nahe dem oberen Rand des Behälters 10 in diesen mündet, jedoch tiefer liegt als die Oberkante der Trennwand 14.

Ein Ablauf 22 führt aus dem Reaktorbehälter 18 durch die Wandung des Behälters 10 zu einer Versickerung, einem Gewässer oder dergleichen. Der Ablauf 22 liegt tiefer als die Oberkante der Trennwand 14 und auch.etwas tiefer als der Zulauf 20.

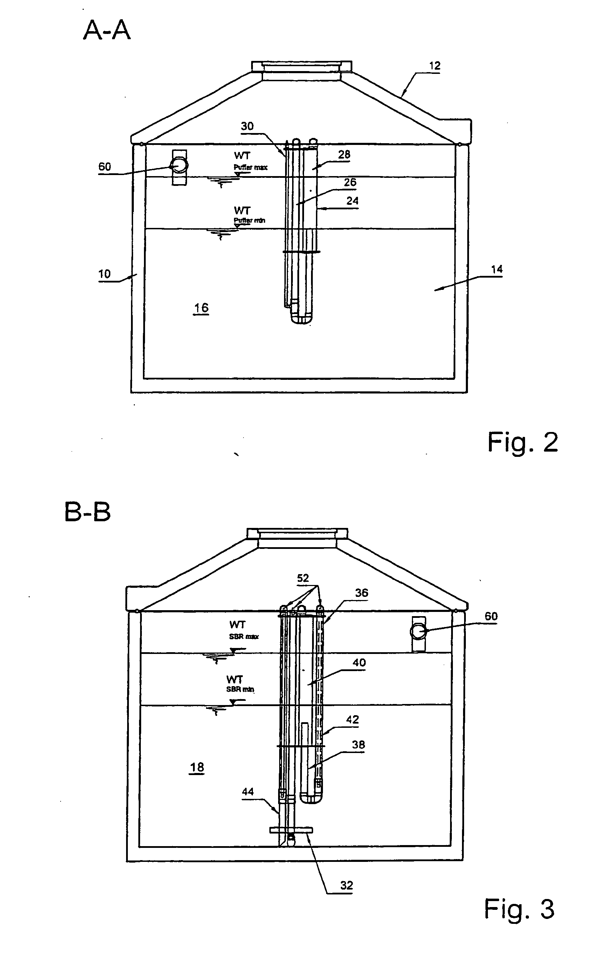

Eine Füllpumpe 24, die als Mammutpumpe ausgebildet ist, ist in dem Pufferbecken 16 angeordnet. Wie am Besten in Figur 2 zu erkennen ist, endet das Steigrohr 26 der Füllpumpe 24 unten mit einem nach oben abgebogenen Schenkel auf einer mit "Puffer min." bezeichneten Höhe. Der nach oben weisende Schenkel des Steigrohres 26 ist durch ein Schutzrohr 28 umschlossen, welches den freien Zutritt des Wassers zu dem unteren Eintrittsende des Steigrohres 26 zulässt, jedoch gröbere Schmutz-Schwebeteile daran hindert, von dem Steigrohr 26 angesaugt zu werden. Das obere Ende des Steigrohres 26 ist über die Oberkante der Trennwand 14 gebogen und endet über dem Reaktorbehälter 18. Ein Luftrohr 30 zur Zuführung von Druckluft mündet in das Steigrohr 26 an dessen unterem Ende unterhalb der nach oben weisenden Eintrittsöffnung.

In dem Reaktorbehälter 18 ist eine Belüftungseinrichtung angeordnet, die einen am Boden des Reaktorbehälters 18 angeordneten Tellerbelüfter 32 aufweist, dem Druckluft über ein Luftrohr 34 zugeführt wird.

Weiter ist in dem Reaktorbehälter 18 eine Abzugpumpe 36 angeordnet, die ebenfalls als Mammut-Pumpe ausgebildet ist. Die Abzugpumpe 36 weist ein Steigrohr 38 auf, dessen unteres Ende U-förmig nach oben gebogen ist, sodass sich die untere Eintrittsöffnung des Steigrohrs 38 auf einer mit "SBR min." bezeichneten Höhe befindet. Die Eintrittsöffnung des Steigrohrs 38 ist durch ein Schutzrohr 40 umschlossen, welches das freie Zufließen von Wasser ermöglicht, jedoch das Ansaugen von gröberen Schwebepartikeln verhindert. Das obere Austrittsende des Steigrohres 38 ist abgebogen und endet über dem Ablauf 22, der das aus dem Steigrohr 38 austretende Wasser aufnimmt. Ein Luftrohr 42 führt Druckluft dem unteren Ende des Steigrohres 38 der Abzugpumpe 36 zu.

Schließlich ist in dem Reaktorbehälter 18 eine Sekundärschlammpumpe 44 angeordnet, die ebenfalls als Mammut-Pumpe ausgebildet ist. Das Steigrohr 46 der Sekundärschlammpumpe 44 mündet unten am Boden des Reaktorbehälters 18. Das obere Ende des Steigrohres 46 ist über die Oberkante der Trennwand 14 gebogen und mündet über dem Pufferbecken 16. Ein Luftrohr 48 führt Druckluft dem unteren Ende des Steigrohres 46 der Sekundärschlammpumpe 44 zu.

Eine Druckluftquelle 50, die vorzugsweise als Kompressor ausgebildet ist, erzeugt Druckluft, die über einen ersten Luftweg 52 einem Ventilverteiler 54 zugeführt wird. Der Ventilverteiler 54, vorzugsweise ein Magnetventilverteiler, führt die Druckluft über vier Ventile steuerbar dem Luftrohr 30 der Füllpumpe 24, dem Luftrohr 34 des Tellerbelüfters 32, dem Luftrohr 42 der Abzugpumpe 36 oder dem Luftrohr 48 der Sekundärschlammpumpe 44 zu.

Der erste Luftweg 52 führt von dem Ventilverteiler 54 weiter zu einem Drucksensor 56. Von dem Drucksensor 56 führt ein zweiter Luftweg 62 zu dem Pufferbecken 16 oder dem Reaktorbehälter 18, je nachdem, welcher Wasserstand ermittelt und einer Steuerung 58, welche die Druckluftquelle 50 und den Ventilverteiler 54 steuert, zugeführt werden soll.

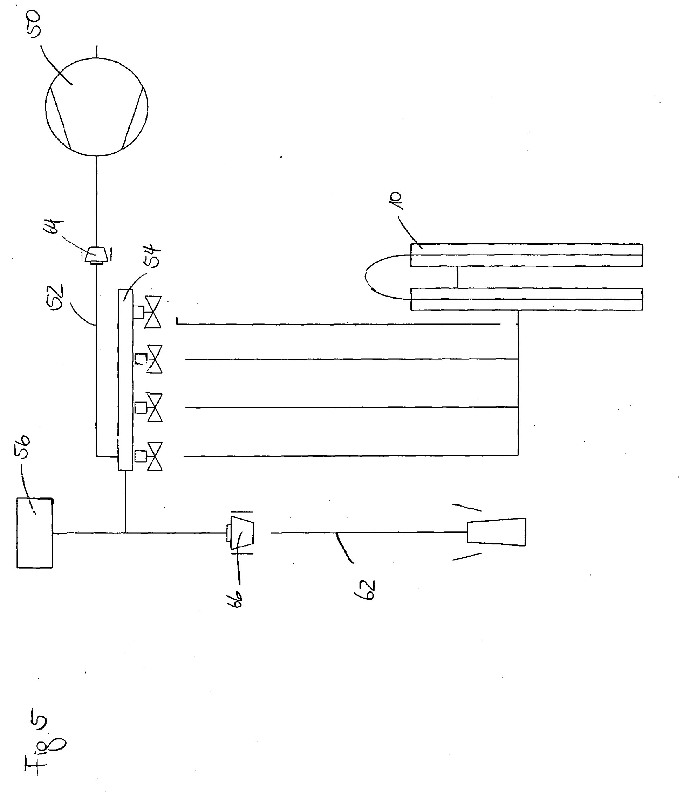

Der erste Luftweg 52 und der zweite Luftweg 62 können entweder unabhängig voneinander bis zu dem Drucksensor 56 führen oder, wie in Figur 5 dargestellt, in ihrem drucksensorseitigen Ende übereinstimmen und sich vor dem Drucksensor 56 in Richtung der drucksensorabgewandten Enden aufgabeln.

In dem ersten Luftweg 52 ist ein erstes Ventil 64 angeordnet, welches als Rückschlagventil, insbesondere als Kugelventil ausgebildet ist, wobei das erste Ventil 64 derart angeordnet ist, dass es öffnet, wenn der Druck am drucksensorabgewandten Ende des ersten Luftwegs 52 höher ist als am drucksensorseitigen Ende des ersten Luftwegs 52. Dabei ist das erste Ventil 64 insbesondere zwischen dem Ventilverteiler 54 und der Druckluftquelle 50 angeordnet. In dem zweiten Luftweg 62 ist ein zweites Ventil 66 angeordnet, welches ebenfalls als Rückschlagventil, insbesondere als Kugelventil, ausgebildet ist, und derart angeordnet ist, dass es öffnet, wenn der Druck am drucksensorabgewandten Ende des zweiten Luftwegs 62 höher ist als der Druck am drucksensorseitigen Ende des zweiten Luftwegs 62.

Das erste Ventil 64 und das zweite Ventil 66 bilden eine Schaltvorrichtung, über welche der Drucksensor 56 entweder mit dem ersten Luftweg 52 oder dem zweiten Luftweg 62 verbindbar ist.

Dadurch, dass die Ventile 64, 66 als Kugelventile ausgebildet sind, ist keine separate Ansteuerung der Ventile 64, 66 vonnöten, sondern die Ventile reagieren auf die entsprechenden Druckverhältnisse in den Luftwegen 52, 62. Ist die Druckluftquelle 50 in Betrieb, wird am drucksensorabgewandten Ende des ersten Luftwegs 52 ein Druck erzeugt, der größer ist als der Druck am drucksensorseitigen Ende des ersten Luftwegs 52, so dass das erste Ventil 64 öffnet. Gleichzeitig wird durch den erzeugten Druck der Druckluftquelle 50 das zweite Ventil 66 in dem zweiten Luftweg 62 geschlossen, da an dem drucksensorseitigen Ende des zweiten Luftwegs 62 ein größerer Druck herrscht als an dem drucksensorabgewandten Ende des zweiten Luftwegs 62. Der Drucksensor 56 ist damit mit dem ersten Luftweg 52 verbunden und misst den in dem zweiten Luftweg 52 herrschenden Druck. Der ermittelte Druck wird lediglich daraufhin ausgewertet, ob er einen bestimmten oberen Schwellenwert überschreitet, was darauf hindeuten könnte, dass eine der dem Ventilverteiler 54 nachgeschalteten Komponenten verstopft ist und somit zu einem Druckaufbau führt, oder ob ein bestimmter unterer Schwellenwert unterschritten wird, was darauf hindeuten könnte, dass die Druckluftquelle 50 nicht ordnungsgemäß arbeitet. In diesem Zustand überprüft der Drucksensor 56 somit die Funktion der Kläranlage und der Druckluftquelle 50.

Wird die Druckluftquelle 50 jedoch ausgeschaltet, schließt das Ventil 64 in dem ersten Luftweg 52, da der Druck am drucksensorabgewandten Ende des ersten Luftwegs 52 geringer ist als der Druck am drucksensorseitigen Ende des ersten Luftwegs 52. Das Ventil 66 in dem zweiten Luftweg 62 öffnet, da der Druck am drucksensorabgewandten Ende des zweiten Luftwegs 62 größer ist als der Druck am drucksensorseitigen Ende des zweiten Luftwegs 62. In diesem Zustand ermittelt der Drucksensor 56 in einer hydrostatischen Höhenmessung den Füllstand des Wassers entweder in dem Pufferbecken 16 oder dem Reaktorbehälter 18. Die ermittelten Druckwerte werden der Steuerung 58 zugeführt, welche in Abhängigkeit von dem Wasserstand gegebenenfalls die Druckluftquelle 50 wieder aktiviert und die den Ventilverteiler nachgeschalteten Komponenten, insbesondere die Füllpumpe 54, den Tellerbelüfter 32, die Abzugpumpe 36 und die Sekundärschlammpumpe 44 entsprechend aktiviert.

Selbstverständlich können die Ventile 64, 66 auch als schaltbare Ventile ausgebildet sein und über die Steuerung 58 zum Öffnen und Schließen angesteuert werden.

Die Kleinkläranlage arbeitet in folgender Weise:

Das gesammelte Abwasser wird über den Zulauf 20 in das Pufferbecken 16 eingeleitet. Das im Allgemeinen schubweise anfallende Abwasser füllt dabei den Pufferspeicher je nach der jeweils anfallenden Menge. Der durch das untere Eintrittsende des Steigrohres 26 der Füllpumpe 24 bestimmte Mindestwasserspiegel "Puffer min." in dem Pufferbecken 16 liegt dabei deutlich über dem Boden des Pufferbeckens 16. Dadurch wirkt das Pufferbecken 16 als Vorklärung, indem sich grobe Schmutzpartikel am Boden des Pufferbeckens 16 absetzen können. Der am Boden des Pufferbeckens 16 sedimentierende Primärschlamm kann bei Bedarf abgesaugt und entsorgt werden.

Die Klärung des Abwassers erfolgt in einem in der Steuerung 58 programmierbar gespeicherten Zeitzyklus, der bspw. sechs Stunden beträgt, also viermal täglich abläuft. Zu Beginn des Zyklus wird der Füllpumpe 24 von dem Kompressor 50 über den Ventilverteiler 54 Druckluft für die zeitliche Dauer eines Füllintervalls zugeführt. Dadurch wird das Abwasser, welches sich in dem Pufferbecken 16 seit dem letzten Füllintervall angesammelt hat, durch die Füllpumpe 24 in den Reaktorbehälter 18 gepumpt, bis der Pegelstand in dem Pufferbecken 16 auf die Höhe "Puffer min." abgesunken ist, in welcher sich das untere Eintrittsende des Steigrohres 26 befindet. Die zeitliche Dauer des Füllintervalls ist so programmiert, dass die Abwassermenge abgepumpt werden kann, die dem durchschnittlichen Abwasseranfall "Puffer max." innerhalb des Zeitzyklus entspricht. Fällt weniger Abwasser an, so arbeitet die Füllpumpe 24 einen Teil des Füllintervalls leer. Fallen weit überdurchschnittliche Wassermengen an, so kann sich das Pufferbecken 16 über den durchschnittlichen Pegelstand von "Puffer max." füllen. Im Extremfall kann das Abwasser in dem Pufferbecken 16 bis auf die Höhe der Oberkante der Trennwand 14 ansteigen und über die Trennwand 14 oder einen im oberen Rand der Trennwand 14 vorgesehenen Notüberlauf 60 in den Reaktorbehälter 18 überlaufen und von dort im Extremfall ungeklärt in den Ablauf 22 gelangen.

Nach dem Ende des Füllintervalls schaltet die Steuerung 58 den Ventilverteiler 54 um, sodass die Druckluft des Kompressors 50 dem Tellerbelüfter 32 zugeführt wird. Dadurch wird dem Wasser in dem Reaktorbehälter 18 Luft zugeführt, die in dem Wasser verteilt aufsteigt und dieses belüftet. Dadurch werden die für den Abbau der in dem Abwasser enthaltenen Schadstoffe notwendigen Bakterien belebt und die biologische Klärung gefördert. Diese Belüftung wird über ein vorgegebenes programmiertes zeitliches Belüftungsintervall durchgeführt.

Anschließend an dieses Belüftungsintervall schaltet die Steuerung 58 den Kompressor 50 für ein zeitlich programmiertes Sedimentationsintervall ab. In diesem Sedimentationsintervall wird das Klärwasser in dem Reaktorbehälter 18 biologisch geklärt und die Abbauprodukte setzen sich am Boden des Reaktorbehälters 18 ab.

Anschließend an dieses Sedimentationsintervall wird am Ende des Zyklus der Kompressor 50 durch die Steuerung 58 wieder eingeschaltet und der Ventilverteiler 54 wird umgeschaltet, um Druckluft der Abzugpumpe 36 zuzuführen. Die Abzugpumpe 36 pumpt nun das geklärte Abwasser aus dem Reaktorbehälter 18 in den Ablauf 22, sodass dieses geklärte Abwasser einer Versickerung, einem Gewässer oder dergleichen zugeführt wird.

Bei Bedarf kann auch in einem weiteren zeitlichen Intervall durch die Steuerung 58 der Ventilverteiler 54 auf die Sekundärschlammpumpe 44 umgeschaltet werden, um den am Boden des Reaktorbehälters 18 sedimentierten Sekundärschlamm in das Pufferbecken 16 zurück zu pumpen.

Ist die Druckluftquelle 50 ausgeschaltet, misst der Drucksensor 56 über den zweiten Luftweg 62 den Füllstand, beispielsweise in dem Reaktorbehälter 18, beispielsweise nach dem Füllintervall, wenn das bei dem letzten Zyklus angefallene Abwasser aus dem Pufferbecken 16 in den Reaktorbehälter 18 gepumpt ist. Bei einem durchschnittlichen Abwasseranfall schwankt dieser Füllstand in dem Reaktorbehälter 18 zwischen einem maximalen Füllstand "SBR max." und dem minimalen Füllstand "SBR min.". Wird durch den Drucksensor 56 ein Füllstand in dem Reaktorbehälter 18 innerhalb dieser Grenzen gemessen, so bedeutet dies, dass die regelmäßig anfallende Abwassermenge zuläuft und die Steuerung 58 schaltet den zeitlichen Zyklus mit den entsprechend diesem durchschnittlichen Abwasseranfall programmierten festen Zeitintervallen für das Belüftungsintervall, das Sedimentationsintervall und das Abzugsintervall.

Ergibt die Druckmessung mittels des Drucksensors 56, dass der Füllstand in dem Reaktorbehälter 18 auf dem Mindeststand "SBR min." steht, so bedeutet dies, dass seit dem letzten Abzugintervall kein Abwasser in das Pufferbecken 16 zugelaufen ist und dementsprechend auch kein Abwasser durch die Füllpumpe 24 aus dem Pufferbecken 16 in den Reaktorbehälter 18 gepumpt werden konnte. In diesem Falle, der z. B. bei längerer Abwesenheit der die Gebäude bewohnenden Personen auftritt, schaltet die Steuerung 58 automatisch auf den sog. Sparmodus. In diesem Sparmodus wird die zeitliche Dauer des Füllintervalls, des Abzugintervalls und vorzugsweise auch des Belüftungsintervalls stark reduziert. Diese Zeitintervalle, in welchen der Kompressor 50 in Betrieb ist und Energie verbraucht, werden daher zeitlich reduziert zu Gunsten des Sedimentationsintervalles, in welchem der Kompressor 50 außer Betrieb ist und somit die Kläranlage keine Energie verbraucht.

Erst wenn der Drucksensor 56 bei einem der folgenden Zyklen anzeigt, dass der Füllstand in der Kläranlage wieder ansteigt, d. h. dass wieder Abwasser anfällt, schaltet die Steuerung 58 wieder auf den programmierten Normalbetrieb.

Weiter kann der Drucksensor 56 dazu verwendet werden anzuzeigen, dass der Füllstand in dem Reaktorbehälter 18 über den maximalen Füllstand "SBR max." angestiegen ist. In diesem Falle kann die Steuerung 58 ein sog. "Hochwasser-Alarmsignal" auslösen, welches anzeigt, dass mehr Abwasser anfällt als der Programmierung der Steuerung entspricht oder dass ein Defekt in der Kläranlage vorliegt.

### Bezugszeichenliste

- 10: Behälter
- 12: Konus
- 14: Trennwand
- 16: Pufferbecken
- 18: Reaktorbehälter
- 20: Zulauf
- 22: Ablauf
- 24: Füllpumpe
- 26: Steigrohr
- 28: Schutzrohr
- 30: Luftrohr
- 32: Tellerbelüfter
- 34: Luftrohr
- 36: Abzugpumpe
- 38: Steigrohr
- 40: Schutzrohr
- 42: Luftrohr
- 44: Sekundärschlammpumpe
- 46: Steigrohr
- 48: Luftrohr
- 50: Druckluftquelle
- 52: erster Luftweg
- 54: Ventilverteiler
- 56: Drucksensor
- 58: Steuerung
- 60: Notüberlauf
- 62: zweiter Luftweg
- 64: erstes Ventil
- 66: zweites Ventil

## Patentansprüche

1. Kläranlage mit wenigstens einem Pufferbecken (16), dem Abwasser zuführbar ist,
und wenigstens einem Reaktorbehälter (18), dem über eine Belüftungseinrichtung (32) Druckluft zuführbar ist, mit einer als Druckluftpumpe ausgebildeten Füllpumpe (24), die das Wasser aus dem Pufferbecken (16) in den Reaktorbehälter (18) pumpt,
mit einer als Druckluftpumpe ausgebildeten Abzugpumpe (36), die das Wasser aus dem Reaktorbehälter (18) in einen Ablauf (22) pumpt,
mit einem Drucksensor (56)
mit einer Druckluftquelle (50),
mit einem Ventilverteiler (54),
mit einem ersten Luftweg (52), der von der Druckluftquelle (50) zu dem Ventilverteiler (54) führt und mit einer Steuerung (58) zur zyklisch gesteuerten Zuführung der Druckluft von der Druckluftquelle (50) zu der Füllpumpe (24), zu der Belüftungseinrichtung (32) oder zu der Abzugpumpe (36) über einen ersten Luftweg (52),
**dadurch gekennzeichnet,**
**dass** der erste Luftweg (52) von dem Ventilverteiler (54) weiter zu dem Drucksensor (56) führt,
**dass** ein zweiter Luftweg (62) von dem Drucksensor (56) zu dem Pufferbecken (16) oder dem Reaktorbehälter (18) führt,
wobei der erste Luftweg (52) und der zweite Luftweg (62) entweder unabhängig voneinander zu dem Drucksensor (56) führen oder in ihrem drucksensorseitigen Ende übereinstimmen und sich in Richtung der Drucksensorabgewandten Enden aufgabeln und
**dass** eine Schaltvorrichtung vorgesehen ist, welche entweder den ersten Luftweg (52) oder den zweiten Luftweg (62) öffnet, so dass sie den Drucksensor (56) entweder über einen zweiten Luftweg (62) zur Durchführung einer hydrostatischen Höhenmessung des Wasserstands mit dem Pufferbecken (16) oder dem Reaktorbehälter (18) verbindet oder den Drucksensor (56) zur Prüfung der Funktion der Druckluftquelle (50) über den ersten Luftweg (52) mit der Druckluftquelle (50) verbindet.

2. Kläranlage nach Anspruch 1,
**dadurch gekennzeichnet, dass** die Schaltvorrichtung ein erstes Ventil (64) und ein zweites Ventil (66) aufweist, wobei das erste Ventil (64) in dem ersten Luftweg (52) und das zweite Ventil (66) in dem zweiten Luftweg (62) angeordnet ist.

3. Kläranlage nach Anspruch 2,
**dadurch gekennzeichnet, dass** das erste Ventil (64) und das zweite Ventil (66) als Rückschlagventil ausgebildet sind, wobei die Rückschlagventile derart in dem ersten Luftweg (52) bzw. dem zweiten Luftweg (62) angeordnet sind, dass sie schließen, wenn der Druck am drucksensorseitigen Ende des jeweiligen Luftwegs (52, 62) höher ist als am drucksensorabgewandten Ende des jeweiligen Luftwegs (52, 62).

4. Kläranlage nach Anspruch 3,
**dadurch gekennzeichnet, dass** die Rückschlagventile als Kugelventile ausgebildet sind.

5. Kläranlage nach einem der vorhergehenden Ansprüche,
**dadurch gekennzeichnet, dass** die Kläranlage als Kleinkläranlage ausgebildet ist.

6. Kläranlage nach einem der vorhergehenden Ansprüche,
**dadurch gekennzeichnet, dass** die Kläranlage als SBR-Kläranlage ausgebildet ist.

7. Kläranlage nach einem der vorhergehenden Ansprüche,
**dadurch gekennzeichnet, dass** die Kläranlage im Wirbelbettverfahren betreibbar ist.

## Claims

1. A waste-water treatment plant with at least one buffer tank (16) to which waste water is capable of being supplied,
and at least one reactor tank (18) to which compressed air is capable of being supplied by way of an aeration device (32), with a filling pump (24) which is designed in the form of a compressed-air pump and which pumps the water out of the buffer tank (16) into the reactor tank (18),
with an extractor pump (36) which is designed in the form of a compressed-air pump and which pumps the water out of the reactor tank (18) into an outflow (22),
with a pressure sensor (56),
with a compressed-air source (50),
with a valve distributor (54),
with a first air path (52) which leads from the compressed-air source (50) to the valve distributor (54),
and with a control means (58) for the cyclically controlled supply of the compressed air from the compressed-air source (50) to the filling pump (24), to the aeration device (32) or to the extractor pump (36) by way of a first air path (52),
**characterized in that**
the first air path (52) leads from the valve distributor (54) further to the pressure sensor (56),
a second air path (62) leads from the pressure sensor (56) to the buffer tank (16) or the reactor tank (18), wherein the first air path (52) and the second air path (62) either lead independently of each other to the pressure sensor (56) or coincide at their end towards the pressure sensor and fork in the direction of the ends facing away from the pressure sensor and a switching device is provided which opens either the first air path (52) or the second air path (62) so that it either connects the pressure sensor (56) to the buffer tank (16) or the reactor tank (18) by way of a second air path (62) in order to to perform a hydrostatic height measurement of the water level or connects the pressure sensor (56) to the compressed-air source (50) by way of the first air path (52) in order to check the operation of the compressed-air source (50).

2. A waste-water treatment plant according to claim 1, **characterized in that** the switching device has a first valve (64) and a second valve (66), wherein the first valve (64) is arranged in the first air path (52) and the second valve (66) is arranged in the second air path (62).

3. A waste-water treatment plant according to claim 2, **characterized in that** the first valve (64) and the second valve (66) are designed in the form of non-return valves, wherein the non-return valves are arranged in the first air path (52) and the second air path (62) respectively in such a way that they close when the pressure at the end of the respective air path (52, 62) towards the pressure sensor is higher than at the end of the respective air path (52, 62) facing away from the pressure sensor.

4. A waste-water treatment plant according to claim 3, **characterized in that** the non-return valves are designed in the form of ball valves.

5. A waste-water treatment plant according to any one of the preceding claims, **characterized in that** the waste-water treatment plant is designed in the form of a small-scale waste-water treatment plant.

6. A waste-water treatment plant according to any one of the preceding claims, **characterized in that** the waste-water treatment plant is designed in the form of an SBR waste-water treatment plant.

7. A waste-water treatment plant according to any one of the preceding claims, **characterized in that** the waste-water treatment plant is capable of being operated in the fluidized-bed method.

## Revendications

1. Station d'épuration comprenant :
- au moins une cuve tampon (16) recevant des eaux usées, et
- au moins un réservoir de réaction (18) alimenté en air comprimé par une installation d'aération (32) équipée d'une pompe de remplissage (24) en forme de pompe à air comprimé qui pompe l'eau de la cuve tampon (16) dans le réservoir de réaction (18),
- une pompe d'extraction (36) en forme de pompe à air comprimé qui pompe l'eau du réservoir de réaction (18) vers une sortie (22),
- un capteur de pression (56),
- une source d'air comprimé (50),
- un distributeur à vannes (54),
- un premier chemin d'air (52) reliant la source d'air comprimé (50) au distributeur à vannes (54) et une commande (58) pour fournir de manière commandée cycliquement, de l'air comprimé de la source d'air comprimé (50) à la pompe de remplissage (24), à l'installation d'aération (32) ou à la pompe d'extraction (36) par un premier chemin d'air (52),
installation **caractérisée en ce que**
- le premier chemin d'air (52) se poursuit à partir du distributeur à vannes (54), vers le capteur de pression (56),
- un second chemin d'air (62) relie le capteur de pression (56) à la cuve tampon (16) ou au réservoir de réaction (18),
- le premier chemin d'air (52) et le second chemin d'air (62), sont reliés indépendamment l'un de l'autre au capteur de pression (56) ou se rejoignent par une extrémité côté capteur de pression et se séparent en direction des extrémités à l'opposé du capteur de pression, et
- un dispositif de commutation qui ouvre soit le premier chemin d'air (52), soit le second chemin d'air (62) pour relier le capteur de pression (56) soit par l'intermédiaire d'un second chemin d'air (62) pour effectuer une mesure hydrostatique de hauteur du niveau d'eau dans la cuve tampon (16) ou le réservoir de réaction (18) ou encore le capteur de pression (56) pour contrôler le fonctionnement de la source d'air comprimé (50), par le premier chemin d'air (52) relié à la source d'air comprimé (50).

2. Station d'épuration selon la revendication 1,
**caractérisée en ce que**
le dispositif de commutation comporte une première soupape (64) et une seconde soupape (66),
la première soupape (64) étant installée dans le premier chemin d'air (52) et la seconde soupape (66) dans le second chemin d'air (62).

3. Station d'épuration selon la revendication 2,
**caractérisée en ce que**
la première soupape (64) et la seconde soupape (66) sont des clapets antiretour,
les clapets antiretour étant installés dans le premier chemin d'air (52) ou dans le second chemin d'air (62) pour se fermer lorsque la pression à l'extrémité côté capteur de pression du chemin d'air (52, 62) respectif, est supérieure à celle de l'extrémité du chemin d'air respectif (52, 62), à l'opposé de celle du capteur de pression.

4. Station d'épuration selon la revendication 3,
**caractérisée en ce que**
les clapets antiretour sont des clapets à bille.

5. Station d'épuration selon l'une des revendications précédentes,
**caractérisée en ce que**
la station est une station d'épuration de petites dimensions.

6. Station d'épuration selon l'une des revendications précédentes,
**caractérisée en ce que**
la station d'épuration est une station d'épuration SBR.

7. Station d'épuration selon l'une des revendications précédentes,
**caractérisée en ce que**
la station d'épuration fonctionne selon le procédé du lit fluidisé.
